# EUROPEAN PATENT APPLICATION

(11) **EP 4 746 183 A1**
(43) Date of publication of application: **20.05.2026**
(21) Application number: 25188360.9
(22) Date of filing: 09.07.2025
(51) Int. Cl.: H01M 50/536

(54) **APPARATUS AND METHOD FOR MANUFACTURING SECONDARY BATTERY USING ULTRASOUND WELDING HORN**

(30) Priority: 13.11.2024 KR 20240161355
(71) Applicant: SAMSUNG SDI CO., LTD., Yongin-si, Gyeonggi-do 17084 (KR)
(72) Inventor: KIM, Donghyun, 17084 Yongin-si (KR); SEO, Yejin, 17084 Yongin-si (KR); MOON, Eunjeong, 17084 Yongin-si (KR)
(74) Representative: Marks & Clerk LLP

(57) **Abstract**

An apparatus for manufacturing a secondary battery, the apparatus including a welding horn, wherein the welding horn includes an electrode tab welding surface (42) on the body (43), and a strip conductor welding surface (44) adjacent to the electrode tab welding surface on the body, the strip conductor welding surface is recessed into the body, resulting in a recessed portion of the body.

## Description

### BACKGROUND

### 1. Field

The present disclosure relates to an apparatus and method for manufacturing a secondary battery using an ultrasound welding horn, and an ultrasound welding horn.

### 2. Description of the Related Art

Batteries include primary batteries that cannot be charged and secondary batteries that can be charged and discharged. Low-capacity secondary batteries may be used in small portable electronic devices such as smartphones, feature phones, laptop computers, digital cameras, and camcorders, and high-capacity secondary batteries may be widely used as driving power sources, power storage batteries, and the like for motors in hybrid vehicles, electric vehicles, and the like. A secondary battery includes an electrode assembly including a positive electrode and a negative electrode, an exterior material such as a case or a can for accommodating the electrode assembly, and an external terminal electrically connected to the electrode assembly.

The above information disclosed in this Background section is for enhancement of understanding of the background of the present disclosure, and therefore, it may contain information that does not constitute a related (or prior) art.

### SUMMARY

Embodiments include an apparatus for manufacturing a secondary battery, the apparatus including a welding horn, wherein the welding horn includes a body, an electrode tab welding surface on the body, and a strip conductor welding surface adjacent to the electrode tab welding surface on the body, wherein the strip conductor welding surface is recessed into the body, resulting in a recessed portion of the body.

The electrode tab welding surface may include a plurality of electrode tab welding tips, and the strip conductor welding surface may include a plurality of strip conductor welding tips.

A strip conductor may be accommodated in the recessed portion of the body.

A depth of the recessed portion of the body may be greater than or equal to a thickness of a strip conductor.

The plurality of strip conductor welding tips on the strip conductor welding surface are identical in terms of shape, dimension and density to the plurality of electrode tab welding tips on the electrode tab welding surface.

Each of the plurality of electrode tab welding tips may have a length equal to a stacked height of a plurality of stacked electrode tabs.

Each of the plurality of strip conductor welding tips may have a length equal to a sum of a stacked height of a plurality of stacked electrode tabs and a thickness of a strip conductor welded to the plurality of stacked electrode tabs.

Embodiments include a method of manufacturing a secondary battery, the method including stacking a plurality of electrode plates including a plurality of stacked electrode tabs, attaching a strip conductor to the plurality of stacked electrode tabs, welding the plurality of stacked electrode tabs, the welding forming an electrode tab weld, and welding the strip conductor to the plurality of stacked electrode tabs to form a strip conductor weld.

Forming the electrode tab weld and forming the strip conductor weld may be performed simultaneously.

The electrode tab weld and the strip conductor weld may be formed using ultrasonic welding.

Forming the electrode tab weld and forming the strip conductor weld may include performing welding of the plurality of stacked electrode tabs and welding of the strip conductor, respectively, using a welding horn including a welding tip for the welding of the plurality of stacked electrode tabs and the welding of the strip conductor.

A first weld mark generated by welding the plurality of stacked electrode tabs may be identical to or different from a second weld mark generated by welding the strip conductor in terms of one of a shape, a dimension, and a density.

Embodiments include an ultrasound welding horn, including a body, an electrode tab welding surface on the body, wherein the electrode tab welding surface includes a plurality of electrode tab welding tips for welding a plurality of stacked electrode tabs, a strip conductor welding surface adjacent to the electrode tab welding surface on the body, wherein the strip conductor welding surface includes a plurality of strip conductor welding tips, the strip conductor welding surface being recessed into the body, resulting in a recessed portion of the body.

The strip conductor may be accommodated in the recessed portion of the body.

A depth of the recessed portion of the body may be greater than or equal to a thickness of the strip conductor.

A plurality of strip conductor welding tips may be identical to a plurality of electrode tab welding tips in terms of shape, dimension, and density.

Each of the plurality of electrode tab welding tips may have a length equal to a stacked height of the plurality of stacked electrode tabs.

Each of a plurality of strip conductor welding tips may have a length equal to a sum of a stacked height of the plurality of stacked electrode tabs and a thickness of the strip conductor.

At least some of the above and other features of the invention are set out in the claims.

### BRIEF DESCRIPTION OF THE DRAWINGS

Features will become apparent to those of ordinary skill in the art by describing in detail embodiments with reference to the attached drawings, in which:
FIG. 1 schematically illustrates an electrode assembly of a secondary battery according to some embodiments of the present disclosure;
FIG. 2 schematically illustrates a pouch-type secondary battery according to some embodiments of the present disclosure;
FIG. 3 schematically illustrates a prismatic secondary battery according to some other embodiments of the present disclosure ;
FIG. 4 is a schematic view of welds of an electrode tab and a strip conductor of an electrode assembly according to some embodiments of the present disclosure;
FIG. 5 is a schematic view of welds of an electrode tab and a strip conductor of an electrode assembly according to some other embodiments of the present disclosure;
FIG. 6 illustrates a welding horn and a welded portion according to some embodiments of the present disclosure;
FIG. 7 is a bottom perspective view illustrating an embodiment of a welding horn;
FIG. 8 is a bottom perspective view illustrating another embodiment of a welding horn;
FIG. 9 is a side view of a welding horn; and
FIG. 10 illustrates an example of dimensions of an electrode tab welding tip and a strip conductor welding tip.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those of ordinary skill in the art.

In the figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. **In** addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings.

The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

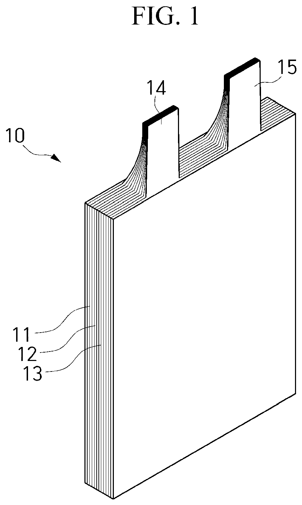

FIG. 1 schematically illustrates an electrode assembly of a secondary battery according to some embodiments of the present disclosure.

Referring to FIG. 1, an electrode assembly 10 may be formed by stacking a first electrode plate 11, a separator 12, and a second electrode plate 13, each of which are formed as thin plates or films. In other embodiments, the electrode assembly 10 may be a wound type rather than a stacked type, and the shape of the electrode assembly 10 may be other than what is shown in FIG. 1. In addition, the electrode assembly 10 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked (e.g., arranged) such that long sides of the electrode assemblies are adjacent to each other and accommodated in a case, and the number of electrode assemblies in a case may vary. The first electrode plate 11 of the electrode assembly may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include an electrode tab 14 (e.g., a first uncoated portion), which is a region to which the first electrode active material is not applied. The electrode tab 14 may be connected to an external first terminal. In some embodiments, when the first electrode plate 11 is manufactured, the electrode tab 14 may be formed by being cut in advance to protrude to (or protrude from) one side of the electrode assembly 10, or the electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminium or an aluminium alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

In some embodiments, the electrode assembly 10 may be accommodated in a case along with an electrolyte. In a pouch-type secondary battery, an electrode assembly 10 may be accommodated in a pouch made of flexible material. In a cylindrical or prismatic secondary battery, an electrode assembly 10 may be accommodated in a cylindrical or prismatic metal casing.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O₂₋ₐD_{α} (0.90≤a≤1.8, 0≤b≤0.5, 0≤c≤0.5, 0<α<2); LiₐNi_{1-8-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐNM_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminium (Al), but the material of the substrate may vary.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and undoped with lithium. The Si negative electrode active material may be silicon, a silicon-carbon composite, SiOₓ (0<x≤2), a Si alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate, an ester, an ether, a ketone, an alcohol solvent, an aprotic solvent, and may be used alone or in combination of two or more.

In addition, when a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but may vary.

The organic material and the inorganic material may be mixed in one coating layer or may be in the form of a coating layer including (or containing) an organic material and a coating layer including (or containing) an inorganic material that are stacked on each other.

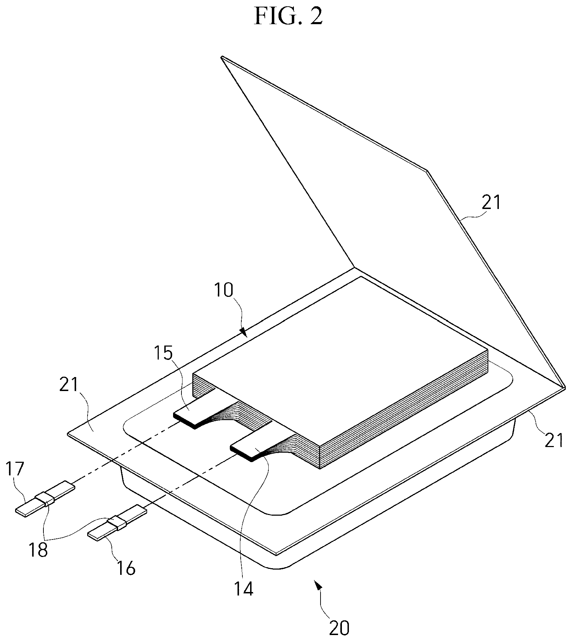

FIG. 2 schematically illustrates a pouch-type secondary battery according to some embodiments of the present disclosure.

The pouch-type secondary battery according to the present embodiment may include an electrode assembly 10 and a pouch 20 that accommodates the electrode assembly 10.

Two electrode tabs 14 and 15 of the electrode assembly 10 as shown in FIG. 1 may be bonded and electrically connected to a strip conductor 16 and a second strip conductor 17 which are exposed to the outside, respectively. A tab film 18 made of a polypropylene (PP) material for pouch sealing and insulation with a pouch 20 may be attached to each of the strip conductor 16 and the second strip conductor 17. Ultrasonic welding, for example, may be used to bond one electrode tab 14 and the strip conductor 16 and bond electrode tab 15 and the second strip conductor 17.

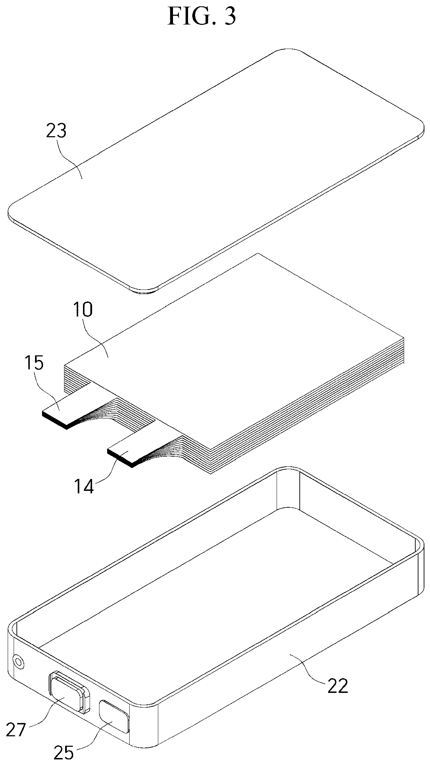

Since the electrical connection between an electrode plate of an electrode assembly and an externally exposed terminal is a basic configuration of a secondary battery, welding between an electrode tab of an electrode assembly and a strip conductor (or a current collector plate) is not only applied to the pouch-type secondary battery shown in FIG. 2. For example, a prismatic secondary battery shown in FIG. 3 has a structure in which a wide lateral transverse surface of a can 22, which is an exterior material of a battery, is open, and an electrode assembly 10 is inserted into an open portion and covered with a cover 23. Two strip conductors are electrically connected to a first terminal 25 and a second terminal 27, respectively, are exposed to the outside of the can 22 are welded and connected to a two electrode tabs 14 and 15, respectively, of the electrode assembly 10 inside the exterior can 22.

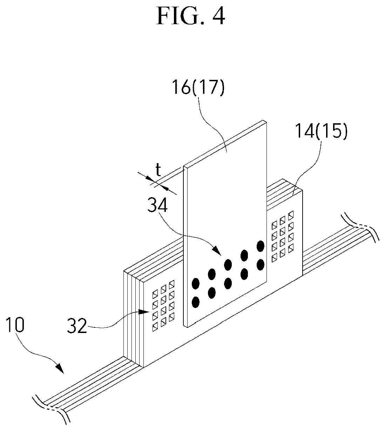

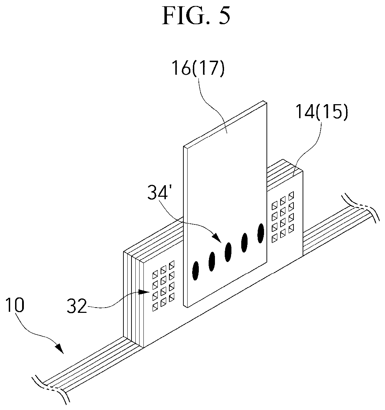

FIG. 4 is a schematic view of welds of an electrode tab 14 or 15 and a strip conductor 16 or 17 of an electrode assembly 10 according to some embodiments of the present disclosure. FIG. 5 is a schematic view of welds of an electrode tab 14 or 15 and a strip conductor 16 or 17 of an electrode assembly 10 according to some other embodiments of the present disclosure.

FIGS. 4 and 5 illustrate a part of the electrode assembly 10 including a plurality of electrode tabs 14 and 15. As shown, the weld is mainly divided into two portions. An electrode tab weld 32 at which the plurality of electrode tabs 14 are welded to each other, and a strip conductor weld 34 at which the strip conductor 16 is welded to the welded electrode tabs 14.

The electrode tab weld 32 and the strip conductor weld 34 may be formed by an ultrasonic welding tool using an ultrasound horn (and an anvil corresponding thereto) in which a welding tip having a shape corresponding to the welds is formed.

Although weld marks (weld shapes) of the electrode tab weld 32 and the strip conductor weld 34 shown in FIG. 4 are illustrated as being different, this is for easy distinction between the electrode tab weld 32 and the strip conductor weld 34, and in an actual product, the weld marks may be identical or similar in terms of a shape, a dimension, and a density or may be completely different. In FIG. 4, the weld mark of the strip conductor weld 34 is illustrated in small circles in two lines, and in FIG. 5, the weld mark of the strip conductor weld 34 is illustrated in large ovals in one line.

As shown in FIGS. 4 and 5, a surface of the electrode tab 14 and a surface of the strip conductor 16 are not co-planar with each other and have a step difference. This is because the strip conductor 16 has a thickness t that is relatively greater than that of the electrode tab 14. Therefore, when a welding surface of a welding horn used in welding the electrode tab weld 32 and the strip conductor weld 34 is flat, more energy may be locally concentrated in a specific area due to a surface step difference between welded portions, which may cause cracks in a corresponding portion, resulting in an abnormality in welding quality. **In** electrode tabs in which an abnormality in welding quality or a crack occurs, a current movement path may be disconnected, and thus a corresponding electrode plate may not perform an electrochemical function. In order to resolve such a problem, welders may manually adjust a position of a welding horn to achieve flatness. However, there is a limitation on such manual work.

According to the present disclosure, a surface step difference between the welded portions of the electrode tab 14 and the strip conductor 16 may be overcome to disperse ultrasonic energy during welding, thereby preventing cracks in the welded portion and improving welding quality.

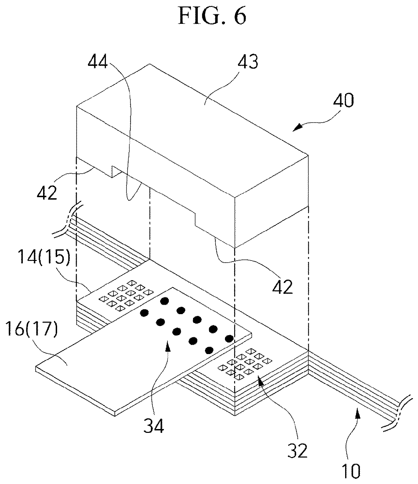

During such electrode tab-strip conductor welding, the electrode tab weld 32 and the strip conductor weld 34 are to be formed simultaneously using an ultrasound horn having a welding surface corresponding to a step difference of a welded portion. FIG. 6 illustrates an ultrasonic welding horn according to some embodiments of the present disclosure.

FIG. 6 illustrates an ultrasonic welding horn 40 and a welded portion according to some embodiments of the present disclosure.

The ultrasonic welding horn 40 of the present embodiment includes a body 43, an electrode tab welding surface 42 which forms an electrode tab weld 32 by welding a plurality of electrode tabs 14 formed by stacking the plurality of electrode tabs 14 formed on an electrode plate constituting an electrode assembly 10, and a strip conductor welding surface 44 which forms a strip conductor weld 34 by welding a strip conductor 16 to the plurality of stacked electrode tabs 14. Here, the strip conductor welding surface 44 forms a recessed portion that is recessed to a deeper depth than the electrode tab welding surface 42 (e.g., due to the step between the electrode tabs 14 and the strip conductor 16).

The strip conductor 16 may be accommodated in the recessed portion of the strip conductor welding surface 44. Accordingly, a surface step difference between welded members due to a thickness of the strip conductor 16 may be absorbed by a depth of the recessed portion, thereby applying the same welding energy to the electrode tab weld 32 and the strip conductor weld 34 and improving welding quality. Therefore, it is desirable that a recessed depth of the recessed portion of the strip conductor welding surface 44 is at least equal to a thickness of the strip conductor 16. In consideration of a tolerance in various aspects, the depth of the recessed portion may be slightly greater than the thickness of the strip conductor 16.

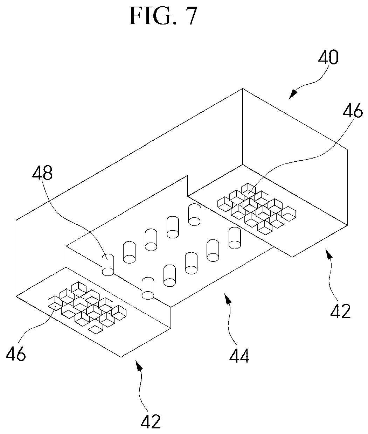

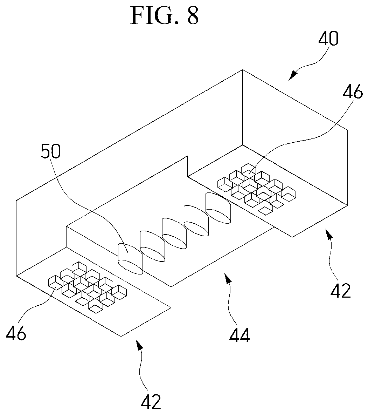

FIG. 7 is a bottom perspective view illustrating one embodiment of an ultrasonic welding horn 40. FIG. 8 is a bottom perspective view illustrating another embodiment of an ultrasonic welding horn 40.

A plurality of electrode tab welding tips 46 for welding a plurality of electrode tabs are formed on an electrode tab welding surface 42, and a plurality of strip conductor welding tips 48 for welding a strip conductor 16 to an electrode tab 14 are formed on a recessed strip conductor welding surface 44.

In FIG. 7, three protrusions each having an approximately quadrangular cross-sectional shape are formed in each of four rows as the electrode tab welding tips 46, and five protrusions each having an approximately circular cross-sectional shape with a larger dimension are formed in each of two rows as the strip conductor welding tips 48.

In FIG. 8, three protrusions each having an approximately quadrangular cross-sectional shape are formed in each of four rows on the electrode tab welding tip 46 like that shown in FIG. 7, and five protrusions each having an approximately oval cross-sectional shape with a larger size are formed in one row as the strip conductor welding tips 48 unlike that shown in FIG. 7 (two rows).

In this way, a plurality of strip conductor welding tips 48 formed on the strip conductor welding surface 44 may be different from a plurality of electrode tab welding tips 46 formed on the electrode tab welding surface 42 in terms of any one of a shape, a dimension, and a density. However, the strip conductor welding tip 48 and the electrode tab welding tip 46 may be identical to each other in terms of any one of a shape, a dimension, and a density.

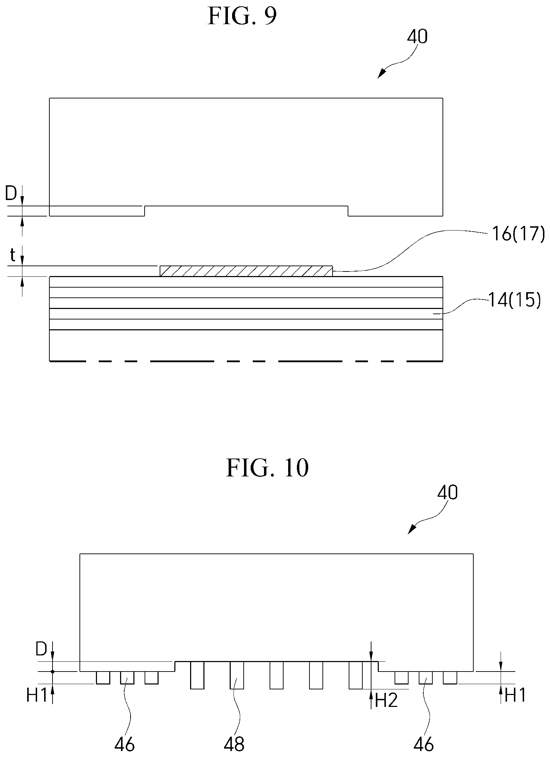

FIG. 9 is a side view of an ultrasonic welding horn 40.

As described above, it is desirable that a recessed depth D of a recessed portion of a strip conductor welding surface 44 is at least equal to or slightly greater than a thickness t of a strip conductor 16. As shown in FIG. 9, since a strip conductor 16 is inserted into and welded to the recessed strip conductor welding surface 44, the ultrasonic welding horn 40 can provide constant energy to the entire surface despite a surface step difference between welded portions, that is, a surface step difference between a strip conductor weld 34 and an electrode tab weld 32.

FIG. 10 illustrates an example of dimensions of an electrode tab welding tip 46 and a strip conductor welding tip 48 according to some embodiments of the present disclosure.

A recessed depth D of a strip conductor welding surface 44 is at least equal to a thickness of a strip conductor 16 as described above.

A height of the electrode tab welding tip 46, that is, a protrusion length H1, may be approximately equal to a stacked thickness of the plurality of stacked electrode tabs 14. This is to ensure that the plurality of stacked electrode tabs 14 are welded without any omission.

A height of the strip conductor welding tip 48, that is, a protrusion length H2, may be approximately equal to the sum of the stacked thickness of the plurality of stacked electrode tabs 14 and the thickness of the strip conductor 16. This is because welding of the plurality of stacked electrode tabs 14 and welding of the strip conductor 16 should be performed.

The thicknesses H1 and H2 may not be absolute standards and may be adjusted according to materials of the electrode tab 14 and the strip conductor 16. For example, the thickness H1 may be set to be slightly less than the stacked thickness of the electrode tabs 14, and the thickness H2 may be set to be slightly greater than the sum of the stacked thickness of the plurality of stacked electrode tabs 14 and the thickness of the strip conductor 16. In FIG. 10, the thickness H2 is illustrated as being slightly greater than the thickness H1.

An actual example will be described. When the thickness of the strip conductor 16 is 80 µm, the depth D of a recessed portion may be 80 µm. When a thickness of the electrode tab 14 is 10 µm and 10 electrode tabs 14 are stacked, since the stacked thickness is 100 µm, the height H1 of the electrode tab welding tip 46 may be set to 100 µm or set to a slightly thin thickness of 90 µm. The height H2 of the strip conductor welding tip 48 may be set to D+H1=180 µm or a slightly thicker thickness of 190 µm or 200 µm.

Hereinafter, a method of manufacturing a secondary battery according to some embodiments of the present disclosure will be described. Hereinafter, as described above in the embodiments, the method will be described based on an electrode tab-strip conductor welding process performed by a welding device.

The method of manufacturing a secondary battery according to some embodiments of the present disclosure includes stacking a plurality of electrode plates including electrode tabs, attaching a strip conductor to the plurality of stacked electrode tabs included in the stacked electrode plates, welding the plurality of stacked electrode tabs 14 to form an electrode tab weld 32, and welding a strip conductor 16 to the electrode tabs to form a strip conductor weld 34.

In some embodiments, the formation of the electrode tab weld 32 and the formation of the strip conductor weld 34 may be performed simultaneously.

In some embodiments, the electrode tab weld and the strip conductor weld may be formed through ultrasonic welding.

In some embodiments, the formation of the electrode tab weld 32 and the formation of the strip conductor weld 34 may include performing the welding of the electrode tabs and the welding of the strip conductor using a welding horn including a welding tip for performing the welding of the electrode tabs and the welding of the strip conductor.

A weld mark generated through the welding of the electrode tabs may be identical to or different from a weld mark generated through the welding of the strip conductor in terms of one of a shape, a dimension, and a density.

In an apparatus and method for manufacturing a secondary battery according to the embodiments of the present disclosure described above can also be applied to secondary batteries of other shapes or types (for example, cylindrical or coin-shaped batteries) other than the secondary batteries shown in FIGS. 2 and 3.

In a secondary battery, the electrode assembly and the external terminal may be electrically connected by welding an electrode tab formed on the electrode assembly to a strip conductor. A plurality of electrode tabs may be formed in the electrode assembly, and in this case, the plurality of electrode tabs may be welded, and the strip conductor may be welded to the welded electrode tabs. Ultrasonic welding may be used for welding the electrode tabs and welding the electrode tabs to the strip conductor.

Surfaces of welded portions may not be co-planar with each other and may have a step difference. **In** this case, due to the step difference between the surfaces of the welded portions, more energy may be locally concentrated in a specific area to cause cracks in a corresponding portion, resulting in an abnormality in welding quality.

According to the present disclosure, a surface step difference of a welded portion between an electrode tab and a strip conductor is solved to disperse ultrasonic energy during welding, thereby preventing cracks in the welded portion and improving welding quality. **In** addition, the welding of electrode tabs and the welding of strip conductor can be simultaneously performed, thereby achieving increased productivity. **In** addition, since the welding of electrode tabs and the welding of strip conductor are performed simultaneously, even when some of the electrode tabs are damaged during manufacturing and use of a secondary battery, a current flow path cannot be disconnected by a strip conductor weld, and the electrochemical action of a corresponding electrode plate can be maintained.

Although the present disclosure has been described above with respect to embodiments thereof, the present disclosure is not limited thereto. Various modifications and variations can be made thereto by those of ordinary skill in the art within the present disclosure as defined by the appended claims and their equivalents.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An apparatus for manufacturing a secondary battery, the apparatus comprising a welding horn, wherein the welding horn comprises:
a body;
an electrode tab welding surface on the body; and
a strip conductor welding surface adjacent to the electrode tab welding surface on the body, wherein the strip conductor welding surface is recessed into the body, resulting in a recessed portion of the body.

2. The apparatus as claimed in claim 1, wherein:
the electrode tab welding surface comprises a plurality of electrode tab welding tips, and
the strip conductor welding surface comprises a plurality of strip conductor welding tips.

3. The apparatus as claimed in claim 2, wherein the plurality of strip conductor welding tips on the strip conductor welding surface are identical in terms of shape, dimension and density to the plurality of electrode tab welding tips on the electrode tab welding surface.

4. The apparatus as claimed in claim 2, wherein each of the plurality of strip conductor welding tips has a length equal to a sum of a stacked height of a plurality of stacked electrode tabs and a thickness of a strip conductor welded to the plurality of stacked electrode tabs.

5. The apparatus as claimed in any one of claims 1 to 4, wherein a strip conductor is accommodated in the recessed portion of the body.

6. The apparatus as claimed in any one of claims 1 to 5, wherein a depth of the recessed portion of the body is greater than or equal to a thickness of a strip conductor.

7. A method of manufacturing a secondary battery, the method comprising:
stacking a plurality of electrode plates comprising a plurality of stacked electrode tabs;
attaching a strip conductor to the plurality of stacked electrode tabs;
welding the plurality of stacked electrode tabs, the welding forming an electrode tab weld; and
welding the strip conductor to the plurality of stacked electrode tabs to form a strip conductor weld.

8. The method as claimed in claim 7, wherein forming the electrode tab weld and forming the strip conductor weld are performed simultaneously.

9. The method as claimed in claim 7 or claim 8, wherein the electrode tab weld and the strip conductor weld are formed using ultrasonic welding.

10. The method as claimed in any one of claims 7 to 9, wherein forming the electrode tab weld and forming the strip conductor weld comprise performing welding of the plurality of stacked electrode tabs and welding of the strip conductor, respectively, using a welding horn comprising a welding tip for the welding of the plurality of stacked electrode tabs and the welding of the strip conductor.

11. An ultrasound welding horn, comprising:
a body;
an electrode tab welding surface on the body, wherein the electrode tab welding surface comprises a plurality of electrode tab welding tips for welding a plurality of stacked electrode tabs; and
a strip conductor welding surface adjacent to the electrode tab welding surface on the body, wherein the strip conductor welding surface comprises a plurality of strip conductor welding tips, the strip conductor welding surface being recessed into the body, resulting in a recessed portion of the body.

12. The ultrasound welding horn as claimed in claim 11, wherein the strip conductor is accommodated in the recessed portion of the body.

13. The ultrasound welding horn as claimed in claim 11 or claim 12, wherein a depth of the recessed portion of the body is greater than or equal to a thickness of the strip conductor.

14. The ultrasound welding horn as claimed in any one of claims 11 to 13, wherein a plurality of strip conductor welding tips are identical to the plurality of electrode tab welding tips in terms of shape, dimension, and density.

15. The ultrasound welding horn as claimed in any one of claims 11 to 13, wherein each of a plurality of strip conductor welding tips has a length equal to a sum of a stacked height of the plurality of stacked electrode tabs and a thickness of the strip conductor.

## Amended claims

### Amended claims in accordance with Rule 137(2) EPC.

1. A method of manufacturing a secondary battery, the method comprising:
stacking a plurality of electrode plates (11, 13) comprising a plurality of stacked electrode tabs (14, 15);
attaching a strip conductor (16,17) to the plurality of stacked electrode tabs (14, 15);
welding the plurality of stacked electrode tabs (14, 15) using ultrasonic welding, the ultrasonic welding forming an electrode tab weld (32); and
welding the strip conductor (16, 17) to the plurality of stacked electrode tabs (14, 15) using ultrasonic welding to form a strip conductor weld (34),
wherein forming the electrode tab weld (32) and forming the strip conductor weld (34) comprise performing welding of the plurality of stacked electrode tabs (14, 15) and welding of the strip conductor (16, 17), respectively, using a welding horn (40) comprising a welding tip for the welding of the plurality of stacked electrode tabs (14, 15) and the welding of the strip conductor (16, 17), and
wherein forming the electrode tab weld (32) and forming the strip conductor weld (34) are performed simultaneously.

2. An ultrasound welding horn (40), comprising:
a body (43);
an electrode tab welding surface (42) on the body (43), wherein the electrode tab welding surface (42) comprises a plurality of electrode tab welding tips (46) for welding a plurality of stacked electrode tabs (14, 15); and
a strip conductor welding surface (44) adjacent to the electrode tab welding surface (42) on the body (43), wherein the strip conductor welding surface (44) comprises a plurality of strip conductor welding tips (48) for welding a strip conductor (16, 17) to the plurality of stacked electrode tabs (14, 15), the strip conductor welding surface (44) being recessed into the body (43), resulting in a recessed portion of the body (43), wherein the recessed portion of the body (43) is configured to accommodate the strip conductor (16, 17).

3. The ultrasound welding horn (40) as claimed in claim 2, wherein a depth (D) of the recessed portion of the body (43) is greater than or equal to a thickness (t) of the strip conductor (16, 17).

4. The ultrasound welding horn (40) as claimed in claim 2 or 3, wherein the plurality of strip conductor welding tips (48) are identical to the plurality of electrode tab welding tips (46) in terms of shape, dimension, and density.

5. The ultrasound welding horn (40) as claimed in claim 2 or 3, wherein each of the plurality of strip conductor welding tips (48) has a length (H2) equal to a sum of a stacked height of the plurality of stacked electrode tabs (14, 15) and a thickness (t) of the strip conductor (16, 17).

6. An apparatus for manufacturing a secondary battery, the apparatus comprising the welding horn (40) of any of claims 2 to 5.
